(19) Europäisches Patentamt
European Patent Office
Office européen des brevets

(11) EP 4 488 601 A1

(12) EUROPEAN PATENT APPLICATION

(43) Date of publication:
08.01.2025 Bulletin 2025/02

(21) Application number: 23183237.9

(22) Date of filing: 04.07.2023

(51) International Patent Classification (IPC):
F25B 21/00 (2006.01)

(52) Cooperative Patent Classification (CPC):
F25B 21/00; F25B 2321/00; F25B 2321/001;
F25B 2321/02

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicants:
• VALEO SYSTEMES THERMIQUES
78320 Le Mesnil Saint-Denis (FR)
• Centre National de la Recherche Scientifique
75016 Paris (FR)
• Institut Polytechnique de Bordeaux
33402 Talence Cedex (FR)
• Université de Bordeaux
33000 Bordeaux (FR)

(72) Inventors:
• FLEURY, Guillaume
33400 Talence (FR)
• LE GOUPIL, Florian
33000 Bordeaux (FR)
• RESENDE, Pedro
33000 Bordeaux (FR)
• HADZIIOANNOU, Georges
33850 Leognan (FR)

(74) Representative: Condorcet IP
76, rue de Maubeuge
75009 Paris (FR)

(54) SOLID-STATE ELECTROCALORIC DEVICE AND ASSOCIATED METHOD

(57) The present invention relates to a solid-state electrocaloric device (8) comprising:
- at least two solid-state thermoelectric heat switch modules (10),
- at least one electrocaloric module (12) comprising at least one solid-state electrocaloric active layer (120) made of electrically polarizable material configured to receive or to release the heat to the thermoelectric heat switch modules (10), and
said electrocaloric module (12) is between said solid-state thermoelectric heat switch modules (10) and in thermal contact with said solid-state thermoelectric heat switch modules (10).

FIGURE 1

**Description**

The invention relates to a solid-state electrocaloric device. The invention further relates to a heat transfer system for transferring heat from a heat source to heat sink.

It has been proposed an electrocaloric device with mechanical motion of an electrocaloric active layer with electrocaloric (EC) material in the form of a membrane of EC material, able of exhibiting a temperature variation when said membrane is electrically powered.

The electrocaloric active layer of the electrocaloric device is able of being brought alternately and mechanically into thermal contact with a heat source and with a heat sink, said heat source or said heat sink can be a component to be thermally regulated. The mechanical motion of such membrane can be produced by electrostatic actuation.

Nevertheless, drawbacks are still present for this type of electrocaloric device.

First, the electrostatic actuation of the electrocaloric material membrane limits the use of the electrocaloric device to low operation frequencies, i.e. the frequencies below 10 Hz.

Moreover, it is necessary to consider the physical displacement of the membrane when designing the size of the electrocaloric device, provided that the displacement of the membrane may require oversizing of the electrocaloric device. Furthermore, the long-term physical displacement of the membrane is likely to produce friction at interfaces and mechanical failures.

Therefore, there is a need to provide an improved electrocaloric device circumventing at least the above-mentioned drawbacks.

In a first aspect, the invention provides a solid-state electrocaloric device comprising:

- at least two solid-state thermoelectric heat switch modules,

- at least one electrocaloric module comprising at least one solid-state electrocaloric active layer made of electrically polarizable material configured to receive or to release the heat to the thermoelectric heat switch modules, and

said electrocaloric module is between said solid-state thermoelectric heat switch modules and in thermal contact with said solid-state thermoelectric heat switch modules.

By "solid-state" is meant a motionless electrocaloric device, a motionless solid-state thermoelectric heat switch module or a motionless electrocaloric active layer. Such device, such thermoelectric heat switch module or such active layer do not rely on mechanical motion or actuation. In other words, in a motionless solid-state electrocaloric device, no movement occurs in any of the stages of the device.

By "electrocaloric" is meant an effect for which, when an external electric field is applied on a material, the material becomes polarized. This dipolar orientation results in a decrease of dipolar entropy, however, as the process is too fast for any heat exchange, the entropy must remain constant; an increase of the lattice vibration entropy is thus induced as compensation, i.e. an increase of the internal temperature. When this field is removed, the material undergoes the reserve process, the dipoles revert back to a random orientation inducing a decrease in temperature. This effect is especially strong around the Curie transition temperature and is reversible, for non-hysteretic materials.

By "electrically polarizable material" or "electrocaloric (EC) material" is meant a dielectric material with permanent or induced dipoles which is suitable to create the electrocaloric effect. Most typically used are ferroelectric or relaxor-ferroelectric material operated around its Curie transition temperature.

By "thermoelectric heat switch module" is meant a module that can be switched between heat conducting state and heat insulating state. Specifically, this module is a gate module which is configured either to receive heat from a heat source or configured to pass heat to the heat sink when only it is at the heat conducting state. This module blocks heat to pass when it is switched at the heat insulating state.

The solid-state electrocaloric device, configured to receive or to release the heat, can operate at high operation frequencies. Therefore, the efficiency of heat exchange can be improved.

In addition, the fact that the solid-state electrocaloric device is motionless prevents any friction or mechanical failure. Since said device is motionless, its size can be smaller than an electrocaloric device with a membrane. Thus, the design of the device can be simplified.

Moreover, the solid-state electrocaloric device is configured to present good thermal contact between the different components, in particular between the heat source and the heat sink.

Furthermore, the solid-state electrocaloric device comprises a dielectric material with a low dielectric loss that forms the electrically polarizable material.

By the "dielectric loss" of a dielectric material is meant the dissipation of energy, for example as heat, through the displacement of charges in an alternating electromagnetic field as polarization switches direction.

According to an aspect of the invention, the solid-state electrocaloric device comprises at least two thermoelectric modules comprising a thermoelectric material, said thermoelectric modules are configured to operate as solid-state thermoelectric heat switch modules.

In addition, the thermoelectric module can also be configured to actively pump heat into in or out of the electrocaloric module. The thermoelectric module can be used to provide an additional heating power or an additional cooling power to complement the electrocaloric device.

According to an aspect of the invention, the thermoelectric module comprises $N$ thermoelectric pairs or $2N$ thermoelectric legs, with each leg presenting a height (thickness) of $h$, and a square surface cross-section with side w, resulting in an area of $A_{TE} = w^2$.

By "height" is meant the thickness of the leg.

According to an aspect of the invention, each thermoelectric leg is laid out in a grid pattern with an inter-leg spacing of $l$.

The two variables w and $l$ allow the determination of the dimensions of the surrounding medium, said medium comprising a filler material. This material presents the same thickness as the thermoelectric legs, $h$, and a surface cross-section area of $A_{filler} = (w + l)^2 - w^2$.

According to an aspect of the invention, the thermoelectric leg w, and the inter-leg spacing 1, present values between 0.2 and 3.0 mm.

According to an aspect of the invention, the thermoelectric leg w, and the inter-leg spacing 1, present values between 0.1 and 1 mm (or $10^2$ to $10^3$ $\mu$m).

According to an aspect of the invention, the thermoelectric material and the filler material are between the electrical contact layer, and the filler material.

According to an aspect of the invention, the electrical contact layer comprises $N$ pads of a conductive material that serves as electrical contact layer.

According to an aspect of the invention, the electrical contact layers form regular pads of area $A_{pad}$, height $h_c$, and cross-section surface area $A_{padCS}$.

According to an aspect of the invention, regular pads of area $A_{pad} = w(2w + l)$ and cross-section surface area $A_{padCS} = w.h_c$.

This cross-section surface area is used in the calculation of the electrical resistance of the electrical contact layers.

According to an aspect of the invention, the filler material has the same height as the electrical contact layers.

According to an aspect of the invention, the electrical contact layer is between at least two insulating layers that provide both electrical and thermal insulation.

According to an aspect of the invention, the insulating layers have a thickness of $h_i$, and comprise the same material used as filler.

According to an aspect of the invention, the number of thermoelectric pairs, N, presents values between 1 and 800 pairs.

the number of thermoelectric pairs, N, presents values between 1 and 800 pairs.

An important relationship can be drawn between the cross-section areas of the thermoelectric material and filler material called $A_{ratio}$ ($A_{ratio} = A_{TE}/A_{filler}$) which can be used to study the device performance as a function of the relative ratio between these two materials.

Specifically, higher coefficient of performance, i.e. COP, is obtainable for low $1/A_{ratio}$ (higher thermoelectric area, $A_{TE}$), because heat is absorbed more efficiently and device resistivity is lower, hence decreasing power consumption (PpA).

This result can be obtained under specific experimental conditions within the scope of the invention.

By "low" $1/A_{ratio}$ is meant the value of $1/A_{ratio}$ ranging between 0 and 20 for the number of thermoelectric pairs, N, presenting values between 1 and 800 pairs.

For this range of $1/A_{ratio}$, the coefficient of performance (COP) may range between 3 and 6.

Numerical values of N may be above 400, ideally between 400 and 800.

According to an aspect of this invention, the thermoelectric leg w and the inter-leg spacing 1 are ranging from 2 to 0.1 mm, and N is ranging from 400 and 800, so as to obtain $1/A_{ratio}$ between 0 and 20.

According to an aspect of the invention, the thermoelectric module further comprises successively, from one external face to the other external face:

- An insulating layer or a filler;

- An electrical contact layer;

- A thermoelectric material;

- An electrical contact layer;

- An insulating layer or a filler;

- An electrocaloric electrode.

According to an aspect of the invention, the insulating layer or the filler comprises a material, such as organic polymers and polymer-based resins, which comprise polypropylene (PP), polyamides (PA), polyetheretherketone (PEEK), polycarbonate (PC), polymethylmethacrylate (PMMA), or polyurethane (PU).

These materials present a low thermal conductivity, specifically below 1.2 W m$^{-1}$K$^{-1}$.

This insulating layer or the filler presents very low thermal conductivity, in particular below 0.3 W m$^{-1}$K$^{-1}$.

According to an aspect of the invention, the thermoelectric material comprises organic or inorganic materials, their alloys or their blends/composites, with high Seebeck coefficients and low thermal conductivity.

In particular, inorganic thermoelectric materials may comprise binary and ternary alloys of Bi, Te, Sb, Se, and Ag, such as, $Bi_xTe_y$, $Sb_xTe_y$, $Se_xAg_y$, $Bi_kSb_lTe_m$, $Bi_kTe_lSe_m$, and similar, at various atomic proportions, with x + y = 1, and k + l + m = 1.

In particular, organic thermoelectric materials may comprise doped or undoped polypyrrole (PPy), poly(3-hexylthiophene) (P3HT), poly(3,4-ethylenedioxythiophene) (PEDOT), or polyaniline (PANI).

In particular, blends/composites refer to the combination of both organic and inorganic material into a single blend/composite material.

This thermoelectric material presents high Seebeck coefficient between 50 and 200 $\mu$V K$^{-1}$, preferably around 200 $\mu$V K$^{-1}$.

The Seebeck coefficient is expressed in terms of absolute value.

This thermoelectric material presents low thermal conductivity, specifically below 1.2 W m$^{-1}$K$^{-1}$.

According to an aspect of the invention, the solid-state electrocaloric active layer is between a pair of two electrical contact layers so as to form a parallel plate single-layered capacitor.

According to an aspect of the invention, the electrocaloric active layer is at least partially in contact with the pair of two electrical contact layers.

According to an aspect of the invention, the electrocaloric module comprises a plurality of subsequent solid-state electrocaloric active layers forming a multi-layered capacitor.

According to an aspect of the invention, at least one electrical contact layer forms a gap g such that two consecutive electrocaloric active layers are in contact with each other across the gap g.

The gap allows a polarization to take place and prevents any short-circuit. This way, the volume of electrically polarizable material that can be polarized without increasing the thickness of the electrocaloric active layers can be maximized, thus decreasing the device volumetric footprint.

According to an aspect of the invention, at least two consecutive electrical contact layers form gaps g that are located at opposite free ends of consecutive electrical contact layers.

According to an aspect of the invention, the gap g is comprised between 0 and 500 $\mu$m, preferably between 0 and 100 $\mu$m, more preferably between 0 and 50 $\mu$m.

According to an aspect of the invention, the electrical contact layer and the electrocaloric active layer have a polygonal shape.

According to an aspect of the invention, the electrical contact layer and the electrocaloric active layer have a rectangular shape.

According to an aspect of the invention, the width G and the length H of the largest surface area of the electrical contact layer is comprised between 0 and 100 cm, preferably between 0 and 50 cm.

Because the sum of the width G (or the length H) with the gap g is approximately equal to the width G (or the length H), we can mathematically (and physically) say that the gap g is negligible in comparison to the width G and the length H. That is, the device comprising such layers can be considered as having infinitely long plates compared with the gap g.

According to an aspect of the invention, the device is configured to operate at an operation frequency $f_{cycle}$ above 500 Hz.

According to an aspect of the invention, the device is configured to operate at an operation frequency up to 2 kHz, preferably ranging between 500 Hz and 2 kHz.

According to an aspect of the invention, the device is configured to operate at an operation frequency $f_{cycle}$ comprised between 1 Hz and 2 kHz, preferably comprised between 500 Hz and 1.5 kHz.

According to an aspect of the invention, the device is configured to operate at an operation frequency $f_{cycle}$ comprised between 6 Hz and 1 kHz.

By "high operation frequency" is meant a frequency above 500 Hz.

High operation frequencies allow high heat extraction, while also decreasing parasitic losses from heat propagation.

According to an aspect of the invention, the device is configured to operate at a polarization field between 10 to

150 MV m$^{-1}$.

Polarization fields up to 150 MV m$^{-1}$ allow the device performance to be adjusted based on the usage, while also providing larger temperature margins for the operation of each individual electrocaloric module.

According to an aspect of the invention, the electrically polarizable material comprises organic and/or polymeric electrically polarizable material.

According to an aspect of the invention, the electrically polarizable material comprises a PVDF-based co- and/or ter-polymer or their blends, in particular poly (vinylidene fluoride)-ter-trifluoroethylene-ter-chlorofluoroethylene (PVDF-TrFE-CFE).

This electrically polarizable material has relaxor-ferroelectric behavior and large electrocaloric effect near room temperature.

The use of polymeric electrocaloric materials ensures higher material adhesion during device fabrication and provides access to additive manufacturing techniques such as screen-printing, ink-jet printing, drop-casting, blade-coating, slot-die coating and spin-coating.

The use of polymeric materials also grants structural pliability and flexibility. The use of poly (vinylidene fluoride)-ter-trifluoroethylene-ter-chlorofluoroethylene (PVDF-TrFE-CFE) ensures a sufficiently high adiabatic temperature change for a moderate electric field, thus promising higher coefficient of performance (COP).

According to another aspect of the invention, the electrically polarizable material comprises an inorganic electrically polarizable material, in particular A-site and/or B-site doped barium titanate, A-site and/or B-site doped lead tantalate, A-site and/or B-site doped lead titanate, A-site and/or B-site doped sodium niobate, and/or A-site and/or B-site doped sodium bismuth titanate.

According to an aspect of the invention, the thermoelectric module comprises $Bi_2Te_3$.

$Bi_2Te_3$ presents good thermoelectric properties at room temperature, and compatibility with many fabrication techniques.

According to an aspect of the invention, a plurality of solid-state electrocaloric active layers that are stacked adjacent to each other so as to form a cascaded layers between the solid-state thermoelectric heat switch modules.

By "cascaded" or "cascading" is meant electrocaloric active layers of solid-state electrocaloric devices that are stacked adjacent to each other, allowing energy (or heat) to flow from electrocaloric active layer to electrocaloric active layer. This cascading geometry is required in order to achieve attractive temperature differences, in other words, superior to 20K.

The invention also relates to a heat transfer system for transferring heat from a heat source to heat sink, the heat transfer system comprising:

- at least one solid-state electrocaloric device according to the invention; and

- the heat source and the heat sink, and

the solid-state electrocaloric device is between the heat source and the heat sink.

The invention also relates to method for controlling operation temperature of the solid-state electrocaloric device according to the invention, said method comprising the step of operating said solid-state electrocaloric device at adiabatic temperature change $\Delta T_{ad.}$ and device temperature change $\Delta T_{device}$ such that $\Delta T_{ad.}$ is inferior to 10 K.

Optimal electrocaloric and thermoelectric properties of said solid-state electrocaloric device are found for these temperatures changes, as low temperature differences increase material and device efficiency as dictated by thermodynamic efficiency.

According to an aspect of the invention, the adiabatic temperature change $\Delta T_{ad.}$ is superior to device temperature change $\Delta T_{device}$ so as to make the adiabatic temperature change $\Delta T_{ad.}$ inferior to 3 K.

Such temperature change increases the device efficiency, thus reduces the energy cost.

The device temperature change $\Delta T_{device}$ increases with the number of used electrocaloric modules, z, such that device temperature change $\Delta T_{device}$ for z electrocaloric modules is approximately equal to z times the device temperature change $\Delta T_{device}$ for the device according to the invention, when $\Delta T_{ad.} < 3$ K and $\Delta T_{ad.} > \Delta Tdevice/z$.

This way, the COP can greatly increase, for example above 20, preferably above 50.

According to an aspect of the invention, the adiabatic temperature change $\Delta T_{ad.}$ and device temperature change $\Delta T_{device}$ are ranging from 0 up to 16 K.

According to an aspect of the invention, the adiabatic temperature change $\Delta T_{ad.} < 3$ K and the device temperature change $\Delta T_{device} < 1.5$ K with difference between adiabatic temperature change $\Delta T_{ad.}$ and device temperature change $\Delta T_{device}$ which is ranging between 1 and 2 K.

This results in improvement of device performance, for example in COP values around 2 and above.

An optimal performance for the solid-state electrocaloric device with one electrocaloric module and two thermoelectric modules can be obtained.

According to an aspect of the invention, device temperature change $\Delta T_{device}$ above 1.2 K by increasing the operation adiabatic temperature change $\Delta T_{ad.}$ of 1 to 5 K above the value of device temperature change $\Delta T_{device}$.

Thus, COP improvements ranging between 2 and 5 can be obtained.

According to an aspect of the invention, device temperature change $\Delta T_{device}$ above 1.2 K by increasing the adiabatic temperature change $\Delta T_{ad.}$ of 1 to 5 K above the value of device temperature change $\Delta T_{device}$.

For the considered range of temperatures for operation, $I_1$ and PpA are respectively of the order of 50 mA and 150 W m$^{-2}$. Organic electrocaloric materials can be preferably used in this range of temperatures for operation.

The invention also relates to method for controlling operation frequency of the solid-state electrocaloric device according to the invention, said method comprising the step of:

varying the polarization/depolarization time, $t_{ad}$, through the use of an electrical resistance such that $f_{cycle}$ can be adjusted.

For example, increasing $t_{ad}$ results in decreasing $f_{cycle}$.

By the "polarization" is meant the alignment of the dipoles inside the electrocaloric material due to the application of an external electric field.

By the "depolarization" is meant the reorientation of the dipoles into random direction due to the removal of the applied external field.

By the "polarization time" is meant the time required to polarize the electrocaloric material inside the multilayered capacitor by application of an external electric field, denoted as $t_{ad}$.

By the "depolarization time" is meant the time required to depolarize the electrocaloric material by removing the applied external field, which has the same duration as the "polarization time", equally denoted as $t_{ad}$.

The invention also relates to method for controlling energy loss of the solid-state electrocaloric device according to the invention, said method comprising the step of:

- using electrocaloric materials with low dielectric loss;

- increasing tad; and

so as to reduce the power consumption PpA.

By "energy loss", is it meant energy dissipation from device heating during operation, due to Joule effect from current leakage through the electrocaloric material.

According to an aspect of the invention, the method comprises a step of operating said device at electrocaloric (EC) energy loss $\omega_{EC}$ up to 0.1 (10%).

The power consumption PpA increases greatly with energy loss $\omega_{EC}$ up to 0.1 (10%), reaching values two or three orders of magnitude higher, even for $\omega_{EC}$ as low as 0.01 (1%).

According to an aspect of the invention, the method comprises a step of operating the solid-state electrocaloric device of the invention at multilayered capacitor (MLC) charging time, tad, ranging between 1ms to 100ms when considering material losses of 10%.

Thus, for $t_{ad}$ of 1 ms, a decrease in power consumption of around 80% can be obtained.

For $t_{ad}$ of 100 ms, a decrease in power consumption of 99.3% is can be obtained. These values are compared to the power consumption estimation for a $t_{ad}$ of 1 μs (0.001 ms).

According to an aspect of the invention, the method comprises a step of operating the solid-state electrocaloric device of the invention at multilayered capacitor (MLC) charging time, $t_{ad}$, of 1ms when considering material losses of 10%.

When considering material losses of 10%, a decrease in power consumption of around 80% is observed for a tad of 1 ms, and down to 99.3% for a tad of 100 ms, when compared to the power consumption estimation for a tad of 1 μs.

The invention also relates to a method of manufacturing a solid-state electrocaloric device comprising:

- at least two solid-state thermoelectric heat switch modules,

- at least one electrocaloric module comprising at least one solid-state electrocaloric active layer made of electrically polarizable material configured to receive or to release the heat to the thermoelectric heat switch modules, and

said electrocaloric module is between said solid-state thermoelectric heat switch modules and in thermal contact with said solid-state thermoelectric heat switch modules, the method comprising the following steps:

- Depositing at the bottom one of the solid-state thermoelectric heat switch modules;

- Depositing the electrocaloric module on the solid-state thermoelectric heat switch module; and

- Depositing the remaining solid-state thermoelectric heat switch modules on the electrocaloric module.

According to an aspect of the invention, the deposition technique is chosen among the following techniques: screen-printing, ink-jet printing, drop-casting, blade-coating, slot-die coating and spin-coating.

The invention also relates to a method of assembling a heat transfer system according to the invention, the method comprising the following steps:

- assembling the at least one solid-state electrocaloric device according to the invention with the heat source and the heat sink such that the solid-state electrocaloric device is between the heat source and the heat sink.

In particular, the screen-printing offers a fast approach to deposit a large variety of materials, whether organic or inorganic materials.

The invention also relates to a use of the solid-state electrocaloric device of the invention in order to cool down or to heat up a component of automotive vehicle.

According to an aspect of the invention, the component comprises at least one battery.

Further advantages, features and details of the invention will be apparent from the following description of a preferred example embodiment and with the aid of the drawings, showing in:

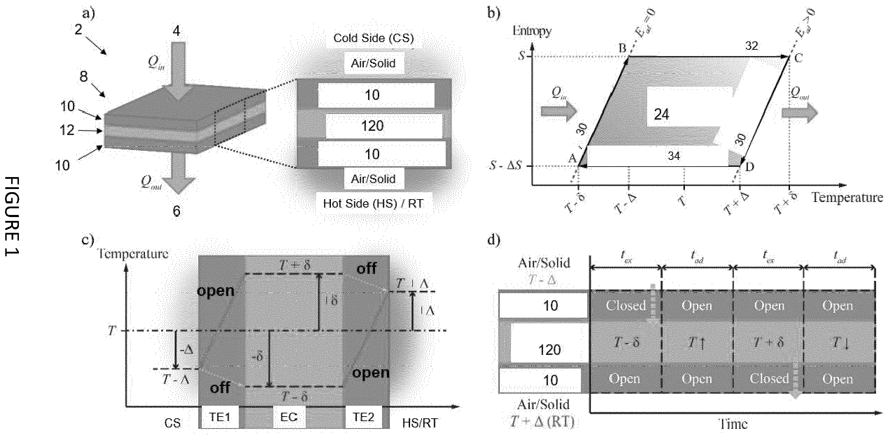

- Figure 1 illustrates a heat transfer system according to the invention, specifically a) The heat transfer system structure. b) Scheme of the electrocaloric refrigeration cycle, showing the different temperatures, the isoelectric heat transfers, and the adiabatic polarization/depolarization steps. c) Temperature profiles during the system operation. The arrows represent heat flow during the closed (off) state of the solid-state thermoelectric heat switch modules (TS) and heat leakage during the open state (open). d) Operation cycle of the system, with heat flowing only when the TSs are in the closed state.

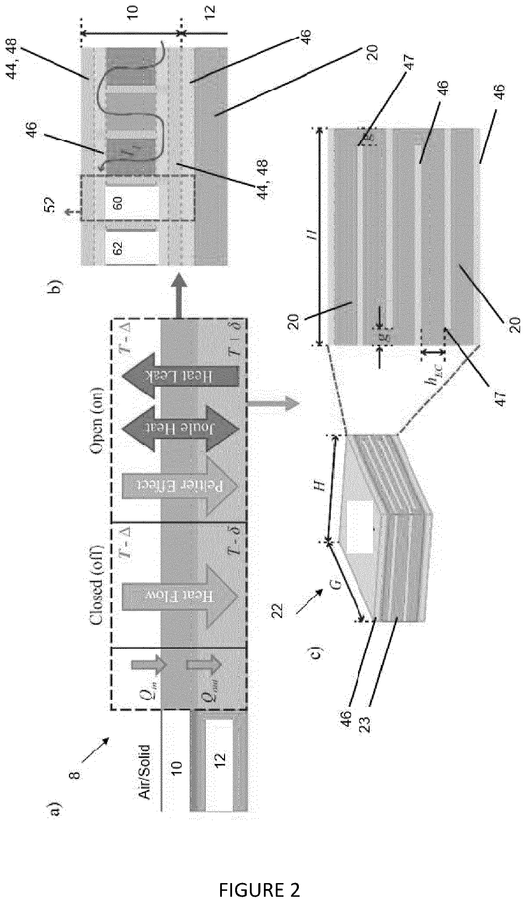

- Figure 2 shows heat flows and partial sectional view of the heat transfer system according to the invention, specifically a) An illustration of the different contributions to the heat flow during the open and closed states of the thermoelectric (TE) modules, b) Enlarged view of figure 2 a) illustrating several thermoelectric (TE) pairs, as well as the different surrounding layers that include electrical contact layers and insulating materials. c) Scheme of the electrocaloric (EC) module with a multi-layered capacitor (MLC) structure.

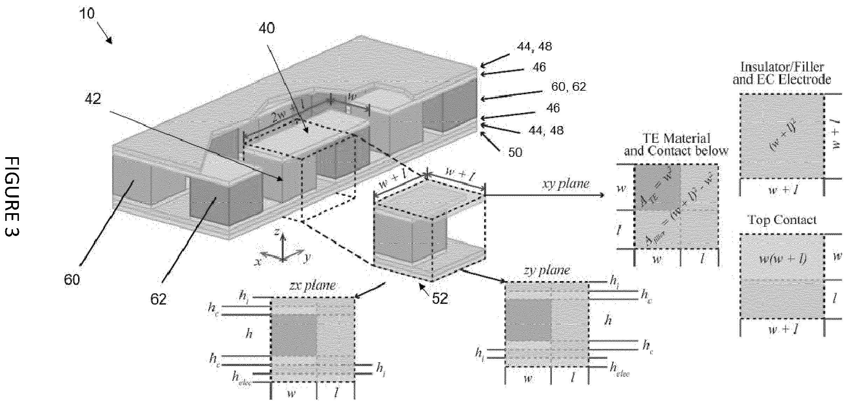

- Figure 3 illustrates the structure and geometrical parameters of the thermoelectric (TE) modules. The device module unit is also represented here with the different planar projections.

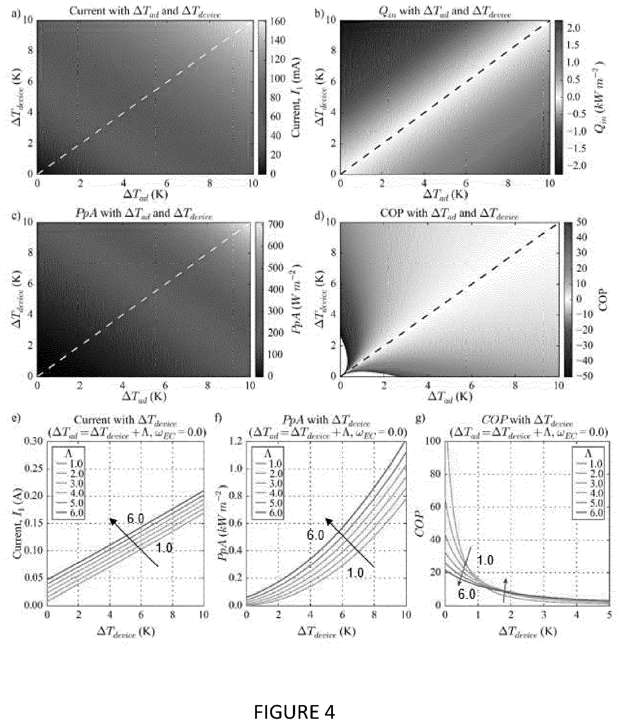

- Figure 4 shows solid-state electrocaloric device performance with operation temperature. Figures 4 a), b), c), and d) are surface plots of $I_1$, $Q_{in}$, $PpA$, and $COP$, respectively, as a function of the device temperature change, $\Delta T_{device}$, and the adiabatic temperature change, $\Delta T_{ad}$. The dashed lines correspond to the case $\Delta T_{ad} = \Delta T_{device}$. The white zones in plot d) at the bottom left, correspond to $COP$ values above (and below) the plot scale. e), f), and g) are plots of $I_1$, $PpA$, and $COP$, respectively, as a function of $\Delta T_{device}$ for several values of $\Delta T_{ad}$, according to $\Delta T_{ad} = \Delta T_{device} + \Lambda$, with $\Lambda$ from 1 to 6 K. In g), the dark grey arrows represent the evolution of the plots with increasing $\Lambda$ (*i.e.*, $\Delta T_{ad}$). The data was calculated with $\omega_{EC} = 0$.

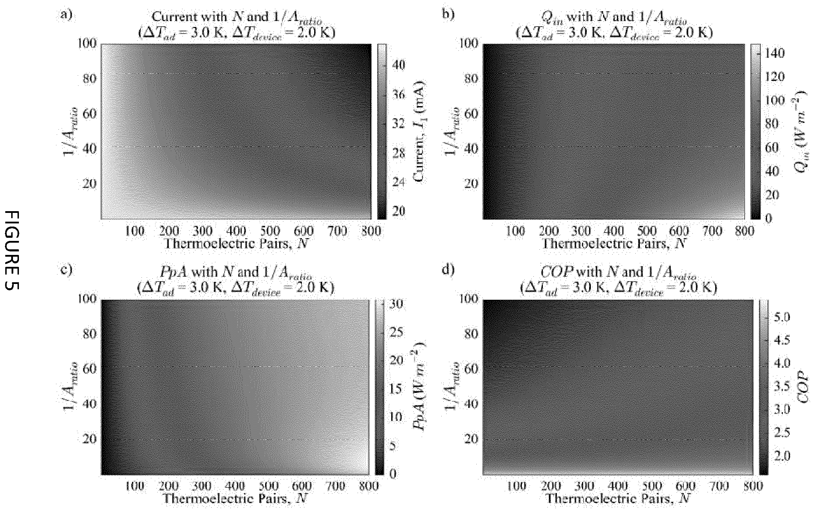

- Figure 5 shows solid-state electrocaloric device performance with geometrical parameters. Figures 5 a), b), c), and d) are surface plots of $I_1$, $Q_{in}$, $PpA$, and $COP$, respectively, as a function of the inverse of the area ratio ($1/A_{ratio}$) between the thermoelectric and filler materials, and the number of thermoelectric pairs, $N$. The data was calculated for $\Delta T_{ad} = 3$ K, $\Delta T_{device} = 2$ K, and $\omega_{EC} = 0$.

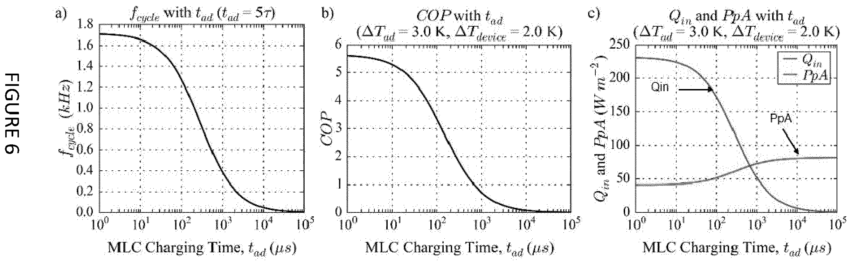

- Figure 6 illustrates solid-state electrocaloric device performance with MLC charging time. Figure 6 a), b), and c) show plots of $f_{cycle}$, $COP$, and $Q_{in}$ and $PpA$ as a function of $t_{ad}$, respectively. The data was calculated for $\Delta T_{ad} = 3$ K, $\Delta T_{device} = 2$ K, $\omega_{EC} = 0$, and $t_{ad} = 5\tau$.

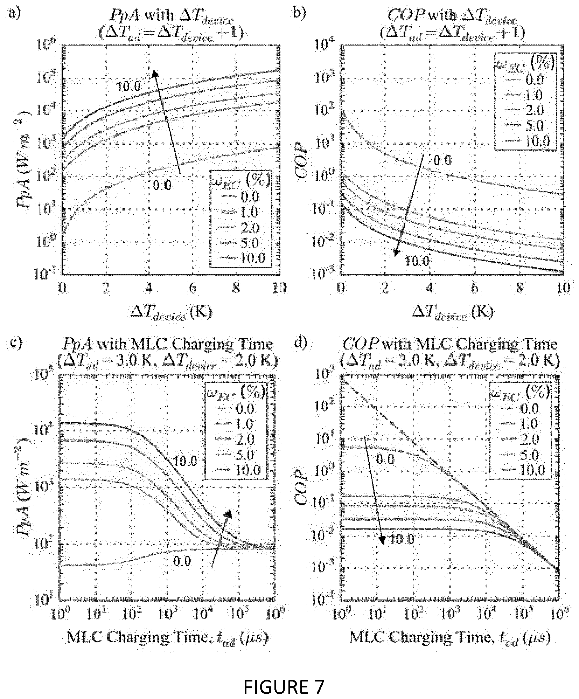

- Figure 7 shows solid-state electrocaloric device performance and power consumption with module energy loss. Figures 7 a) and b) show plots of $PpA$ and the $COP$ as functions of $\Delta T_{device}$ (with $\Delta T_{ad} = \Delta T_{device} + 1$), up to 10 K, for several $\omega_{EC}$ values ranging from 0 to 10% (0.01 to 0.1). c) and d) show plots of $PpA$ and the $COP$ as functions of $t_{ad}$, for several $\omega_{EC}$ values ranging from 0 to 10%, and for $\Delta T_{ad} = 3$ K, $\Delta T_{device} = 2$ K. The dashed grey line in d) represents a linear fit of the $COP$ functions for very large $t_{ad}$ (above $10^5$ μs), showing the asymptotic behavior of the $COP$ functions for increasing $t_{ad}$.

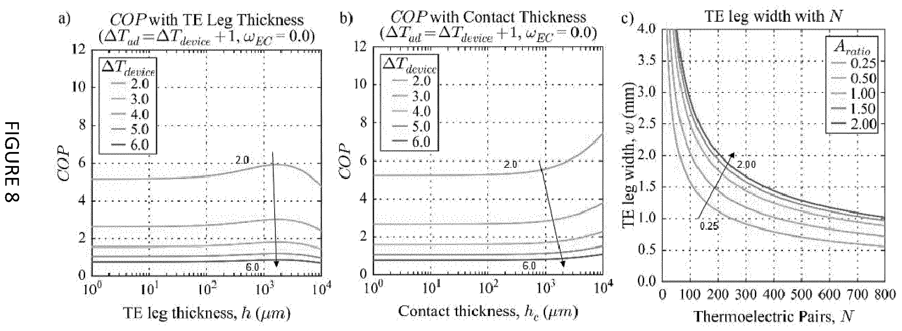

- Figure 8 shows solid-state electrocaloric device performance with geometrical parameters. Figures 8 a) and b) are respectively plots of the COP as a function of the TE leg thickness ($h$) and the electric contact thickness ($h_c$),

respectively, for $\Delta T_{device}$ ranging from 2 to 6 K. The data was obtained for $\omega_{EC}$ = 0. c) Thermoelectric leg width, w, as a function of $N$, for several area ratios $(A_{ratio})$ ranging from 0.25 up to 2.

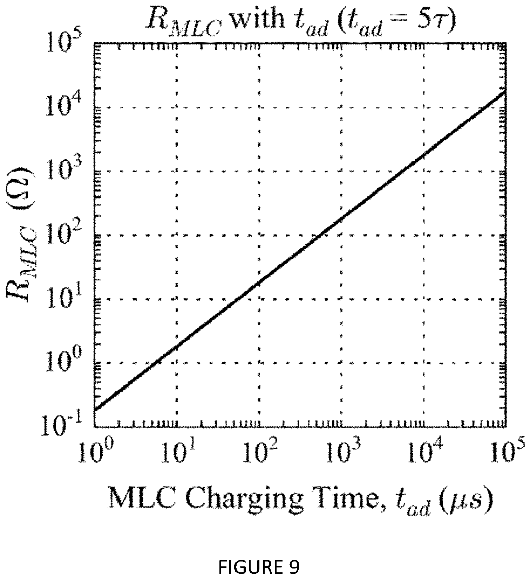

- Figure 9 shows Multi-layered Capacitor Resistance, $R_{MLC}$, as a function of $t_{ad}$, with $t_{ad}$ = $5\tau$.

Identical components or respectively components with the same function are provided with the same reference numbers in the figures.

### DEVICE MODEL

In the following:

By "device" is meant a "solid-state electrocaloric device" according to the invention.
By "system" is meant a "heat transfer system" according to the invention.
By "thermal switch" or TS is meant a "thermoelectric heat switch module" according to the invention.
By "TE" is meant thermoelectric.
By "EC" is meant electrocaloric.
By "electrocaloric material" is meant "electrocaloric active layer" or "solid-state electrocaloric active layer".
By "insulating material" is meant insulating layer according to the invention.

Referring to figure 1, the heat transfer system 2 for transferring heat from a heat source 4 to heat sink 6, the heat transfer system 2 comprising:

- one solid-state electrocaloric device 8; and
- the heat source 4 and the heat sink 6, and

the solid-state electrocaloric device 8 is between the heat source 4 and the heat sink 6.
The solid-state electrocaloric device 8 comprises:

- two solid-state thermoelectric heat switch modules 10,
- one electrocaloric (EC) module 12 comprising at least one solid-state electrocaloric active layer 120 made of electrically polarizable material configured to receive or to release the heat to the thermoelectric heat switch modules 10, and

said electrocaloric module 12 is between said solid-state thermoelectric heat switch modules 10 and in thermal contact with said solid-state thermoelectric heat switch modules 10.
The thermoelectric modules 10 are configured to operate as solid-state thermoelectric heat switch modules 10.
The electrocaloric module 12 comprises a plurality of subsequent solid-state electrocaloric active layers 20 forming a multi-layered capacitor 22 (MLC).
We assume that: (i) heat losses only occur vertically under the form of Joule heating (no radiation or convection losses), in the direction of heat flow [as seen in Fig. 1 a)], as the lateral dimensions of the device 8 are significantly larger than the expected thickness; (ii) contact thermal resistance is negligible, considering the different components are stacked and in close contact; (iii) the different thermoelectric (TE) and electrocaloric (EC) material properties are temperature independent for the considered range of temperatures; (iv) and that, the solid-state thermoelectric heat switch (TS) modules 10 are capable of completely isolating the electrocaloric (EC) module 12 from the surrounding environment, allowing an adiabatic temperature increase/decrease to take place during material polarization /depolarization.
Fig. 1 b) shows the electrocaloric (EC) cooling cycle 24, after the system 2 has reached operation steady-state. The cycle starts in point A, with the internal temperature and entropy of the device 8 at a minimum ($T - \delta$ and $S - \Delta S$). Heat is then absorbed ($Q_{in}$) from the cold side (i.e. heat source 4) through an isoelectric transfer 30 (by keeping the applied E at zero, or at a minimum), increase the temperature and entropy of the device 8 to $T - \Delta$ and $S$, respectively, corresponding to point B of the cycle. An adiabatic temperature change can now be induced by applying a high electric field (E > 0), while keeping the device 8 isolated. This transformation increases the internal temperature of the device 8 from $T - \Delta$ to $T + \delta$, at constant entropy, taking the device 8 from point B to point C. Finally, the device 8 is allowed to expel heat $(Q_{out})$ to the heat sink 6 with the environment through another isoelectric transfer 30 at high $E$, decreasing its internal temperature from $T + \delta$ to $T + \Delta$, and reaching point D. The cycle can then return to its initial state by removing the applied $E$, leading to material depolarization and temperature decrease (adiabatic process) back to $T - \delta$ (point A). The different temperatures values presented by the device 8 during the EC cycle are shown in Fig. 1 c). By repeating this cycle, heat is transported from the cold side to the hot side.

The performance can be estimated through the ratio of the extracted heat, $\Delta Q_{in}$, and the total performed work, $W_{total}$. The total work can be obtained from a linearization of the system 2 in which the total work is obtained from the individual work performed by each module $L$:

$$W_{total} = \sum_{mod=1}^{L} W_{mod} = W_{TE1} + W_{EC} + W_{TE2}$$

On the other hand, $\Delta Q_{in}$ is obtained from the total heat absorbed at the cold side of the device 8 (the side we wish to cool down). From these expressions we can extract the coefficient of performance, $COP$, a dimensionless quantity used to assess system 2 performance:

$$COP = \frac{\Delta Q_{in}}{W_{total}}$$

When $COP > 1$, the device 8 extracts more energy than the work for its operation; when $COP < 1$, the device 8 consumes more energy than the extracted heat. The $W_{total}$, $\Delta Q_{in}$, and $COP$ are functions that depend on the geometrical and material properties of the device 8.

The solid-state thermoelectric heat switch (TS) modules 10 can be operated under two modes: (i) the solid-state thermoelectric heat switch (TS) modules 10 are solely used to block/stop heat propagation to the cold side (passive); and (ii) the solid-state thermoelectric heat switch (TS) modules 10 are used to block but also to actively pump heat into the electrocaloric (EC) module 12.

In the first case, heat absorption is governed only by the thermal conductivity of the thermoelectric (TE) module 10 as well as the adiabatic temperature change of the electrocaloric (EC) material. In the second mode, the solid-state thermoelectric heat switch (TS) modules 10 offer higher heat absorption but also increase device power consumption.

In the following text, we will discuss and model the first mode, relying only on the contribution of passive heat flow across the TE modules 10 due to the induced adiabatic temperature change of the EC module 12.

## WORK AND PERFORMANCE

To obtain the expressions for this model, we need to determine the device temperature profile and operation time cycle, as illustrated in Fig. 1 c) and d), respectively. We assume the system 2 is found at an average temperature $T$ from which other temperature values can be obtained, as seen in Fig. 1 c). During operation, the device 8 experiences an external temperature difference of $2\Delta$ ($\Delta T_{device}$), corresponding to a cold and hot sides with temperatures of $T_{cold} = T - \Delta$ and $T_{hot} = T + \Delta$ (from which, $\Delta T_{device} = T_{hot} - T_{cold}$), respectively. Finally, for the device 8 to extract heat from the cold to the hot side, we require temperature differences across the TSs 10. This is accomplished by changing the internal temperature of the EC module 12 through the adiabatic temperature change, $\Delta T_{ad}$, of the material (during the adiabatic polarization 32/depolarization 34). The total temperature change experienced by the electrocaloric (EC) material is $2\delta$, from which we extract the lowest and highest temperatures of the EC active layer 120, $T - \delta$ and $T + \delta$, respectively. Note that in this configuration the real expression for the adiabatic temperature change is given by $\delta + \Delta$, which can easily be calculated from $\frac{\Delta T_{ad}}{2} + \frac{\Delta T_{device}}{2}$ . Despite this, we will refer to the adiabatic temperature change as $\Delta T_{ad}$ which is obtained from $2\delta$. From these quantities we obtain working conditions for the device, mainly that $\Delta T_{device} < \Delta T_{ad}$ and that $T_{cold} = T - \Delta > T - \delta$. These expressions establish that $\delta > \Delta$ is a necessary condition for the device to successfully extract heat from the cold to the hot side. From the temperature profiles, we can also calculate the Carnot Efficiency (for cooling), $\eta$, yielding:

$$\eta = \frac{T_{cold}}{T_{hot} - T_{cold}} = \frac{T - \Delta}{2\Delta}$$

From the operation time cycle in Fig. 1 d), we see that device operation starts with the first TE module 10 in the closed state, allowing heat to flow into the EC module 12 (initially at $T - \delta$). The amount of absorbed heat is controlled by the thermal exchange time, $t_{ex}$. After the EC module 12 has thermalized with the cold side and reached $T - \Delta$, the TE module 10 changes to the open state and the adiabatic temperature change can take place to increase the temperature of the EC module 12 to $T + \delta$. The duration of this process depends on the charging speed of the Multi-Layered Capacitor (MLC) 22 containing the electrocaloric (EC) material, and is represented here as the adiabatic time, $t_{ad}$. The same process is repeated for the second TE module 10, closing the switch (turn on) to allow heat exchange with the exterior (at $T + \Delta$), followed by switch opening and EC module temperature decrease. The total duration of the EC refrigeration cycle is given by:

$$t_{cycle} = 2t_{ex} + 2t_{ad}$$

Combining this expression with $W_{total}$ and the total device area ($A_{device}$, area in contact with the cold side), we can obtain the device Power-per-Area, $PpA$ (in W m$^{-2}$):

$$PpA \ [W \ m^{-2}] = \frac{W_{total}}{t_{cycle} \times A_{device}}$$

**Work function for the Thermoelectric Modules**

The work of the thermoelectric (TE) modules 10 is calculated from the subtraction of the out-going heat ($\Delta Q_{out}$) from the in-going heat ($\Delta Q_{in}$). Referring to Fig. 2 a), different contributions to the heat flow according to two states of the thermoelectric (TE) modules 10, i.e. closed and open, as the thermoelectric (TE) modules 10 may operate as solid-state thermoelectric heat switch modules 10. During the closed state of the thermoelectric (TE) module 10, the in-going heat flow (in Watts) is given by:

$$Q_{in}^{closed} \ [J \ s^{-1}] = 2NS_k(\delta - \Delta)$$

Which represents the heat flow through a material with a thermal conductance of $S_k$ and a temperature difference of $\delta$ - $\Delta$. During the open state, there is an inversion of the direction of the temperature gradient, resulting in heat leakage in the direction of the cold side. To counter this, we take advantage of the Peltier effect to pump heat back into the device 8, resulting in a net zero heat flow. Nevertheless, the powering of the open state also produces additional unwanted leakage under the form of Joule heating. We assume the heat generated from Joule heating only propagates vertically, in both directions. The expression for the in-going heat flow (in Watts) during the open state can then be written:

$$Q_{in}^{open} \ [J \ s^{-1}] = \ Q_{Peltier} - \frac{1}{2}Q_{Joule} - Q_{Leak}$$

$$= 2N\alpha I(T - \Delta) - \frac{1}{2}2N.I^2R_{leg} - 2NS_k(\delta + \Delta)$$

To determine the amount of energy that enters the thermoelectric module TE 10, $\Delta Q_{in}$, we need to take into account the duration of the solid-state thermoelectric heat switch states (Figs. 1 and 2). The duration of the closed state is determined by the thermal exchange time, $t_{ex}$, while the duration of the open state has an additional contribution from the adiabatic polarization/depolarization time, $t_{ad}$. During operation, the thermal switches 10 spend more time in the open state ($t_{ex} + 2t_{ad}$) than in the closed state (only $t_{ex}$). From this, the in-going heat can be obtained:

$$\Delta Q_{in} \ [J] = Q_{in}^{closed}.t_{ex} + Q_{in}^{open}.(t_{ex} + 2t_{ad})$$

$$= 2N\left[\left(S_k(\delta - \Delta)\right)t_{ex} + \left(\alpha I_1(T - \Delta) - \frac{1}{2}I_1^2R_{leg} - S_k(\delta + \Delta)\right)(t_{ex} + 2t_{ad})\right]$$

The same procedure is used to obtain the out-going heat, $\Delta Q_{out}$, taking into consideration the direction of each contribution to the heat flow:

$$\Delta Q_{out} \ [J] = Q_{out}^{closed}.t_{ex} + Q_{out}^{open}.(t_{ex} + 2t_{ad})$$

$$= 2N\left[\left(S_k(\delta - \Delta)\right)t_{ex} + \left(\alpha I_1(T + \delta) + \frac{1}{2}I_1^2R_{leg} - S_k(\delta + \Delta)\right)(t_{ex} + 2t_{ad})\right]$$

This second expression is similar to $\Delta Q_{in}$, but note that now the joule heating has a positive contribution. The absolute temperature in the expression for the Peltier contribution is also different, corresponding to the temperature of the interface to which the energy is being transferred (in this case, heat is being transferred into the electrocaloric material that is kept at $T + \delta$; we assume the interface between thermoelectric (TE) module 10 and electrocaloric (EC) module 12 presents the same temperature as the electrocaloric (EC) material). The work of the thermoelectric (TE) module 10 can now be obtained, yielding:

$$W_{TE1}[J] = \Delta Q_{out}[J] - \Delta Q_{in}[J] = 2N(t_{ex} + 2t_{ad})\left[\alpha I_1(\delta + \Delta) + R_{leg}I_1^2\right]$$

Which presents a dependence on the temperature difference across the TE module 10 ($\delta + \Delta$), as well as the full contribution from Joule heating $\left(R_{leg}I_1^2\right)$. In addition to the expression for the thermoelectric module work, we also need to determine an expression for the powering currents of the thermoelectric that ensure zero heat flow during the open state. This is accomplished by setting $Q_{in}^{open} = 0$, from which we obtain the following equation:

$$Q_{in}^{open}[J\,s^{-1}] = 2N\left(\alpha I_1(T - \Delta) - \frac{1}{2}I_1^2 R_{leg} - S_k(\delta + \Delta)\right) = 0$$

$$\Leftrightarrow -\frac{1}{2}R_{leg}I_1^2 + \alpha(T - \Delta)I_1 - S_k(\delta + \Delta) = 0$$

Solving for $I_1$, we obtain the following expression for the current of the first thermoelectric (TE) module 10:

$$I_1 = \frac{\alpha(T - \Delta)}{R_{leg}}\left(1 - \left[1 - \frac{2R_{leg}(\delta + \Delta)S_k}{\alpha^2(T - \Delta)^2}\right]^{1/2}\right)$$

The same approach is used to determine the work and the powering current for the second thermoelectric (TE) module 10. An expression for the *COP* can be obtained from $\Delta Q_{in}$ (of the first TE module 10), and the total device work (including the EC module 12 work):

$$COP = \frac{\Delta Q_{in}}{W_{total}}$$

$$= \frac{2N\left[(S_k(\delta - \Delta))t_{ex} + \left(\alpha I_1(T - \Delta) - \frac{1}{2}I_1^2 R_{leg} - S_k(\delta + \Delta)\right)(t_{ex} + 2t_{ad})\right]}{2N(t_{ex} + 2t_{ad})\left[\alpha(I_1 + I_2)(\delta + \Delta) + R_{leg}(I_1^2 + I_2^2)\right] + \omega_{EC} \cdot \varepsilon_{rEC} n\frac{\varepsilon_0 A_{device}}{2h_{EC}}(E_{ad}h_{EC})^2}$$

This expression can be simplified, as the applied values for $I_1$ result directly from the quadratic solution, ensuring $Q_{in}^{open} = 0$. In addition, if we assume a lossless electrocaloric (dielectric) material with full energy recovery, we can set $\omega_{EC} = 0$. The simplified expression for the *COP* is then:

$$COP = \frac{(S_k(\delta - \Delta))t_{ex}}{(t_{ex} + 2t_{ad})\left[\alpha(I_1 + I_2)(\delta + \Delta) + R_{leg}(I_1^2 + I_2^2)\right]}$$

The different material and geometrical parameters will influence the behavior of the $Q_{in}^{open}(I_1)$ function. Different combinations of said parameters may result in a $Q_{in}^{open}(I_1)$ without a real solution for the $Q_{in}^{open} = 0$ condition. In this case, the open state of the thermoelectric (TE) module 10 can never be reached, and the system presents heat losses.

## Geometry of the Thermoelectric Module

The thermoelectric module 10 that acts as solid-state thermoelectric heat switch module 10 contains several different components with different geometrical parameters. Fig. 3 shows an illustration of the device structure. The thermoelectric module 10 comprises $N$ thermoelectric pairs 40 ($2N$ thermoelectric legs 42), with each leg 42 presenting a height (thickness) of $h$, and a square surface cross-section with side w, resulting in an area of $A_{TE} = w^2$. Each thermoelectric leg 42 is laid out in a grid pattern with an inter-leg spacing of $l$. The two variables w and $l$ allow the determination of the dimensions of the surrounding medium, said medium comprising a filler material. This material presents the same thickness as the thermoelectric legs 42, $h$, but a surface cross-section area of $A_{filler} = (w + l)^2 - w^2$. An important relationship can be drawn between the cross-section areas of the thermoelectric and filler material called $A_{ratio}$ ($A_{ratio} = A_{TE}/A_{filler}$) which can be used to study the device performance as a function of the relative ratio between these two materials. Above and below the thermoelectric-filler layer 44 or the filler material 44, we have the electrical contact layer 46, which comprises $N$ pads of a conductive material that serves as electrical contact, as well as the filler material (same as the previous case). The electrical contact layers 46 form regular pads of area $A_{pad} = w(2w + l)$, height $h_c$, and cross-section surface area $A_{padCS} = w\, h_c$. This last area is used in the calculation of the electrical resistance of the electrical contact layers 46. The filler material 44 has the same height as the electrical contact layers 46, and has an approximate area of $A_{device} - N.A_{pad}$. Above and below the electrical contact layer 46, we can find two insulating layers 48 that provide both electrical and thermal insulation. These insulating layers 48 have a thickness of $h_i$, and comprise the same material used as filler (these layers 48 comprise different materials as long as they provide the necessary insulation).

Referring again to figure 3, a bottom layer of the electrocaloric module 12 corresponds to the first electrical contact layer 46 of the electrocaloric module 12. This electrical contact layer 46 has a thickness of $h_{elec}$, and is assumed to have the same material properties as the electrical contact layer 46. The insulating layers 44 and the electrode 50 of the electrocaloric module have the same surface area as the device 8. A module unit 52 is also represented with several planar projections as seen from the different Cartesian planes. The different quantities in this model related to the work function of the thermoelectric modules 10 are calculated in relation to the device module unit 52, from which the total contribution is obtained by a multiplication by $2N$.

## Seebeck Coefficient per Module Unit

The device Seebeck coefficient depends on the coefficients of the different thermoelectric materials ($n$ and $p$-type materials 60, 62). Some previous works have also considered the contribution from the conductive materials (electrical contact layers 46), which typically have coefficients of the order of $10^0$ to $10^1$ $\mu VK^{-1}$, or lower. These values are small when compared to the coefficients found in good thermoelectric materials 60, 62. For this reason, we have not included the contribution from conductive materials to the Seebeck coefficient of the thermoelectric pairs 40. The expression for the heat inflow from the Peltier effect arising from $N$ pairs 40 (with an $n$- and $p$-type thermoelectric materials 60, 62) at an interface with temperature $T_{cold}$ can be expressed as:

$$Q_{Peltier}[J\ s^{-1}] = N\alpha_n I T_{cold} + N\alpha_p I T_{cold}$$

Where $\alpha_n$ and $\alpha_p$ are the absolute values of the Seebeck coefficient for the $n$- and $p$-type thermoelectric materials 60, 62, respectively. From this equation we can demonstrate that the Seebeck coefficient of the module unit 52 is obtained from the average Seebeck coefficient:

$$N\alpha_n I T_{cold} + N\alpha_p I T_{cold} = N(\alpha_n + \alpha_p) I T_{cold} = 2N\left(\frac{\alpha_n + \alpha_p}{2}\right) I T_{cold}$$

By substituting $\frac{\alpha_n + \alpha_p}{2}$ with $\alpha$, we can express the full set of equations as a function of the average Seebeck coefficient. Note that, the Seebeck coefficient of the entire device is the sum of all the contributions from the thermoelectric legs 42, i.e., $N(\alpha_n + \alpha_p)$, where $\alpha_n + \alpha_p$ represents the coefficient of the thermoelectric pair 40.

## Electrical Resistance per Module Unit

The device electrical resistance per module unit 52, $R_{leg}$, is a multicomponent function that depends on the resistance of the thermoelectric materials 60, 62 ($R_{TE}$), the electrical contact layers 46 ($R_{contact}$), and the interface resistance ($R_{inter}$). In this work, we have assumed that the interface resistance is negligible (or zero) in comparison to that of the thermoelectric materials 60, 62 and electrical contact layers 46. Nevertheless, interface resistance can be estimated from experimental measurements and later included in the model. The general expression is:

$$R_{leg} = R_{TE} + R_{contact} + 2R_{inter}$$

Note that this expression refers to the resistance of the module unit 52, and to obtain the total device resistance we need to multiply $R_{leg}$ by *2N*. A factor of 2 is also seen for the interface resistance, which is explained by the presence of two interfaces per module unit 52: contact - TE, and TE - contact (see module scheme in Fig. 3). As we have *n*- and *p*-type thermoelectric materials 60, 62, we need to consider the contribution of two separate resistivity values for $R_{TE}$. Because each module unit 52 only contains one thermoelectric leg 42, the contribution from the two thermoelectric materials 60, 62 can be obtained by calculating the resistance for two modules 10 followed by a division by 2. The correct final expression takes the form:

$$R_{leg} = \frac{1}{2}R_{TEn} + \frac{1}{2}R_{TEp} + R_{contact} + 2R_{inter}$$

From this expression we see that the $R_{TE}$ takes the average value of the electrical resistances of these two thermoelectric materials 60, 62. By attributing two separate values for the resistance (and resistivity) of *n*- and *p*-type materials 60, 62, we can effectively decouple the contributions and input separate values (this allows the independent variation of material properties during calculation, without resorting to the direct variation of the average value). We can now obtain expressions for the different components from the material resistivity and the geometry of the device 8 (Fig. 3):

$$R_{TE} = \frac{1}{2}R_{TEn} + \frac{1}{2}R_{TEp} = \frac{1}{2}\frac{\rho_{TEn} \cdot h}{w^2} + \frac{1}{2}\frac{\rho_{TEp} \cdot h}{w^2} = \frac{1}{2}\frac{h}{w^2}\left(\rho_{TEn} + \rho_{TEp}\right)$$

$$R_{contact} = R_{pad} = \frac{\rho_c \cdot (2w + l)}{h_c \cdot w}$$

Considering $R_{inter} = 0$, the final expression for $R_{leg}$ is:

$$R_{leg} = \frac{1}{2}\frac{h}{w^2}\left(\rho_{TEn} + \rho_{TEp}\right) + \frac{\rho_c \cdot (2w + l)}{h_c \cdot w}$$

**Thermal Conductance per Module Unit**

The same approach can be used to calculate the thermal conductance per module unit 52, $S_k$. The different planar projections shown in Fig. 3 illustrate TE modules 10 comprising multiple layers, including the insulating and filler materials 44, 48, thermoelectric (TE) materials 60, 62, and the electrical contact layers 46. All these components will have a contribution to the thermal conductance. The final expression can be obtained from the series and parallel contributions of each layer, so that:

$$S_k = \left(\frac{1}{S_i} + \frac{1}{S_c} + \frac{1}{S_{TE}} + \frac{1}{S_c} + \frac{1}{S_i} + \frac{1}{S_{elec}}\right)^{-1} = \left(\frac{2}{S_i} + \frac{2}{S_c} + \frac{1}{S_{TE}} + \frac{1}{S_{elec}}\right)^{-1}$$

Where $S_i$, $S_c$, $S_{TE}$, and $S_{elec}$, are the thermal conductances for the insulating layers 44, electric contact layers 46, TE material layer 60, 62, and EC electrode layer 50, respectively. The individual expressions are obtained from the thermal conductivity and geometry of each layer:

$$S_i = \frac{(w + l)^2 \cdot k_i}{h_i}$$

$$S_{elec} = \frac{(w+l)^2 \cdot k_{elec}}{h_{elec}}$$

$$S_{TE} = \frac{1}{2}\frac{w^2}{h} \cdot \left(k_{TEn} + k_{TEp}\right) + \frac{[(w+l)^2 - w^2] \cdot k_{filler}}{h}$$

The expression of the thermal conductance for the electrical contact layers 46 is obtained as a function of $N$ (thermoelectric pairs) and the total area of the device 8, $A_{device}$

$$S_c = \frac{1}{2N \cdot h_c}\left(N \cdot w(2w+l) \cdot \left(k_c - k_{filler}\right) + A_{device} \cdot k_{filler}\right)$$

## THERMOELECTRIC MODULES

A general expression for the input work of the TE modules 10 can be obtained by subtracting the absorbed heat ($\Delta Q_{in}$) from the expelled heat ($\Delta Q_{out}$). Figs. 2 a) and b) show a scheme of the different contributions to the heat flow during the open and closed states; and a scheme of the TE module 10, respectively. From these schemes an expression for $\Delta Q_{in}$ can be obtained, resulting in the following equation:

$$\Delta Q_{in} [J] = 2N \left[\left(S_k(\delta - \Delta)\right)t_{ex}\right.$$

$$\left. + \left(\alpha I_1(T - \Delta) - \frac{1}{2}I_1^2 R_{leg} - S_k(\delta + \Delta)\right)(t_{ex} + 2t_{ad})\right]$$

Where $N$ is the number of TE pairs 40 of the TE module 10; $S_k$ is the thermal conductance per module unit (per $2N$); $R_{leg}$ is the electrical resistance per module unit (per $2N$); $I_1$ is the applied electrical current that produces a temperature gradient through the Peltier effect; and $\alpha$ is the average of the absolute Seebeck coefficients of the $n$- and $p$-type TE materials 60, 62 (in the case that the $n$- and $p$-type TE materials 60, 62 have mirror Seebeck coefficients, $\alpha$ takes the TE module value. The expressions for $S_k$ and $R_{leg}$ are functions that depend on the material (thermal and electrical properties) and geometrical properties of the device.

The first term inside the square brackets refers to the total heat absorbed during the closed state of the TE module 10, while the second term corresponds to the open state. The same treatment is applied to calculate $\Delta Q_{out}$, after which an expression for $W_{TE1}$ is obtained:

$$W_{TE1}[J] = \Delta Q_{out} [J] - \Delta Q_{in} [J] = 2N(t_{ex} + 2t_{ad})\left[\alpha I_1(\delta + \Delta) + R_{leg}I_1^2\right]$$

The equation shows a direct dependence on the temperature difference across the module and the Joule heating (TS off state). For the thermoelectric (TE) module 10 operating as solid-state thermoelectric heat switch module (TS) 10 to block heat from propagating back to the cold side, it must produce a heat flow through the Peltier effect equal to the losses induced by heat leakage and Joule heating (heat flowing from the electrocaloric (EC) module 12 back to the cold side). This condition is used to determine the value of the current $I_1$ to obtain zero heat flow during the open state. Considering only the heat flow components during the open state, we have:

$$Q_{open}^{in} [J\,s^{-1}] = 2N\left(\alpha I_1(T - \Delta) - \frac{1}{2}I_1^2 R_{leg} - S_k(\delta + \Delta)\right) = 0$$

$$\Leftrightarrow -\frac{1}{2}R_{leg}I_1^2 + \alpha(T - \Delta)I_1 - S_k(\delta + \Delta) = 0$$

Solving for $I_1$, we obtain the following expression for the current of the first TE module 10:

$$I_1 = \frac{\alpha(T - \Delta)}{R_{leg}}\left(1 - \left[1 - \frac{2R_{leg}(\delta + \Delta)S_k}{\alpha^2(T - \Delta)^2}\right]^{1/2}\right)$$

This solution ensures that $Q^{in}_{open} = 0$ which reduces the expression of $\Delta Q_{in}$ to $2N(S_k(\delta - \Delta))t_{ex}$. This shows that the absorbed heat, under zero leakage, depends only on the temperature difference across the module, $S_k$, $N$, and $t_{ex}$. Following the same analysis, we obtain expressions for $W_{TE2}$ and $I_2$, for the second TE module 10:

$$W_{TE2}\,[J] = 2N(t_{ex} + 2t_{ad})\left[\alpha I_2(\delta + \Delta) + R_{leg}I_2^2\right]$$

$$I_2 = \frac{\alpha(T - \delta)}{R_{leg}}\left(1 - \left[1 - \frac{2R_{leg}(\delta + \Delta)S_k}{\alpha^2(T - \delta)^2}\right]^{1/2}\right)$$

**ELECTROCALORIC MODULE**

The work input of the EC module 12 can be estimated from the power expression for an multi-layered capacitor (MLC) 22, with $n$ layers, with individual thickness of $h_{EC}$, dielectric permittivity $\varepsilon_{EC}$ ($\varepsilon_{EC} = \varepsilon_0\varepsilon_{rEC}$), and area $A_{capacitor}$:

$$W_{EC}\,[J] = \frac{1}{2}CV^2 = \frac{1}{2}\frac{n\varepsilon_{EC}A_{capacitor}}{h_{EC}}V^2$$

In an MLC 22 with large plates, $A_{capacitor}$ can be approximated to $A_{device}$ considering that the lateral dimensions of the electrodes (length H and width G) are very large compared to the small lateral gaps, g ($g \ll G$, $H$), as shown in Fig. 2 c). The applied potential $V$ can be substituted by the applied electric field (adiabatic electric field, $E_{ad}$) times the thickness of the electrocaloric (EC) active layers 20, $h_{EC}$. The final expression is:

$$W_{EC}\,[J] = \varepsilon_{rEC}n\frac{\varepsilon_0 A_{device}}{2h_{EC}}(E_{ad}h_{EC})^2$$

Referring to fig. 2 c), two consecutive electrical contact layers 46 form gaps g that are located at the opposite free ends 47 of consecutive electrical contact layers 46.
An estimation of the $t_{ad}$ can also be extracted from the charging/discharging time constant for a capacitor. For an MLC 22 with an external series resistance, $R_{MLC}$, we have:

$$\tau = R_{MLC}C = R_{MLC}\varepsilon_{rEC}n\frac{\varepsilon_0 A_{device}}{h_{EC}}$$

Considering charging/discharging cycles of *ca.* 99% of the total applied voltage, we obtain a $t_{ad}$ around $5\tau$.
A last term should be added to the $W_{EC}$ expression which accounts for the energy loss from the EC material polarization. The term $\omega_{EC}$ takes values between 0 and 1, with zero representing no loss (no loss from material polarization and energy recovered during discharge), and 1 representing complete loss (leaks from a lossy dielectric or dissipated energy). The corrected expression is:

$$W_{EC}\,[J] = \omega_{EC} \cdot \varepsilon_{rEC}n\frac{\varepsilon_0 A_{device}}{2h_{EC}}(E_{ad}h_{EC})^2$$

A final expression for $W_{total}$ can now be obtained from the sum of the contributions of the different electrocaloric and thermoelectric modules 10, 12, yielding:

$$W_{total} = 2N(t_{ex} + 2t_{ad})\left[\alpha(I_1 + I_2)(\delta + \Delta) + R_{leg}(I_1^2 + I_2^2)\right] + \omega_{EC}$$

$$\cdot \varepsilon_{rEC} n \frac{\varepsilon_0 A_{device}}{2h_{EC}} (E_{ad} h_{EC})^2$$

## THERMAL EXCHANGE TIME

The thermal exchange time, $t_{ex}$, controls how much energy is absorbed by the system 2, and depends on the material properties, the geometry, the temperature differences, and the volume of active EC material 120. Typically, $t_{ex}$, coincides with the time required to reach thermalization between the cold side and the electrocaloric EC module 12 (going from $T - \delta$ to $T - \Delta$), before undergoing adiabatic temperature change (increasing the temperature to $T + \delta$). The same energy absorbed in this step is later released to the hot side, and given the symmetry of our model, the duration of this second thermal exchange is also $t_{ex}$. As a first approximation, we have resorted to a simple linear solution for $t_{ex}$, from the ratio between the energy required to warm up the EC material 120 ($\Delta Q$) and the heat in-flow ($Q_{in}$):

$$t_{ex} = \frac{\Delta Q}{Q_{in}} = \frac{m. c_v \Delta T}{Q_{in}}$$

Where $m$ is the mass of EC material; $c_v$ is the specific heat capacity at constant volume of the EC material; and $\Delta T$ is the induced temperature increase of the EC material through heat absorption. Using the obtained expression for $\Delta Q_{in}$, under the condition of no-leakage, with a $\Delta T$ of $\delta - \Delta$, the expression for $t_{ex}$ becomes:

$$t_{ex} = \frac{m. c_v. (\delta - \Delta)}{2N. S_k. (\delta - \Delta)} = \frac{m. c_v}{2N. S_k}$$

The mass of the EC material 120 is obtained from the MLC geometry and the material density ($\zeta_{EC}$) yielding $m = n. A_{device} h_{EC}. \zeta_{EC}$.

## DEVICE GEOMETRY

The structure and geometrical parameters influence how heat flows through the different layers of the device, affecting the absorbed heat and the final performance. This is especially the case of the TE modules 10 that contain different materials (the TE materials 60, 62 but also insulating layers 44, fillers 48, and electrical contact layers 46). This geometrical dependence is included in the device thermal conductance, $S_k$, and electrical resistance, $R_{leg}$ (see above). The TE modules 10 contain $N$ thermoelectric pairs 40 (see Fig. 3), each having an $n$- and $p$-type TE leg 42 (total of 2N legs). The different TE legs 42 are laid out in a grid pattern and are surrounded by a filler material 48, said filler material can be air or any low thermal conductivity dielectric. The filler material comprises a material, such as organic polymers and polymer-based resins, which comprise polypropylene (PP), polyamides (PA), polyetheretherketone (PEEK), polycarbonate (PC), polymethylmethacrylate (PMMA), or polyurethane (PU). Above and below the TE legs, we have the electrical contact layers 46 that connect all the TE legs 42 in series. The electrical contact layers 46 are also surrounded by same filler material 48. Lastly, two additional insulating layers 44 are also present above and below the electrical contact layers 46, providing both thermal and electrical insulation. The TE modules 10 can be represented as 2$N$ identical modular units (each containing one TE leg 42, along with the surrounding media) from which the quantities $S_k$ and $R_{leg}$ are calculated. The full contribution is then simply obtained by multiplying the module unit 52 contribution with the total number of units, 2N.

## RESULTS AND DISCUSSION

Assessing device performance requires the analysis of several quantities, namely, the module powering currents ($I_1$ and $I_2$), the absorbed heat ($Q_{in}$), the power consumption ($PpA$), and the coefficient of performance ($COP$). The type of materials used in these devices (organics or inorganics) will also limit the range of practical operation conditions. Such an example is the order of magnitude of the applied currents which when very high can induce device overheating and damage from Joule heating, especially when considering organic materials. We have focused on ranges of material properties that are easily found in different TE materials 60, 62 and EC materials 120, aiming for more realistic and achievable devices. As a model TE material 60, 62, we have chosen bismuth telluride ($Bi_2Te_3$).

$Bi_2Te_3$ presents good thermoelectric properties at room temperature, and compatibility with many fabrication techniques. We assume the *p*-type material has mirror properties to $Bi_2Te_3$).

As a model EC material we have chosen a Poly(vinylidene fluoride) (PVDF) terpolymer containing trifluoroethylene (TrFE) and chlorofluoroetylene (CFE),

This EC material has relaxor-ferroelectric behavior and large EC effect near room temperature.

For the filler 48 material and insulating material 44 we have chosen the properties of a polyurethane foam,

This polyurethane foam presents very low thermal conductivity.

Table I contains a summary of all the material and geometrical properties used in these calculations. Calculations were run with our model with a Python script.

Table I. Summary of the materials, properties, and variables used for the performed calculations. The values used correspond to those shown in the Static Value column, while the values shown in the Value Range column refer to calculation studies with variable range to assess the evolution of performance. The indexes $c$, $elec$, $filler$, and $i$, correspond to contact, electrode, filler, and insulating layer, respectively.

| | Property [Units] | Variable | Static Value | Value Range |
|---|---|---|---|---|
| **Thermoelectric Materials:** Bi$_2$Te$_3$ (n-type) and mirror material (p-type) | Seebeck Coefficient [µV K$^{-1}$] | $\alpha$ | 200 | Up to 600 |
| | Electrical Resistivity [Ω cm$^{-1}$] | $\rho_{TEn}, \rho_{TEp}$ | $5 \times 10^{-4}$ | - |
| | Thermal Conductivity [W m$^{-1}$ K$^{-1}$] | $k_{TEn}, k_{TEp}$ | 1.3 | ~0 to 2.5 |
| | Thickness [µm] | $h$ | 60 | Up to $10^4$ |
| | Number of TE pairs | $N$ | Geometry dependent (up to 800) | |
| **Contacts and EC Electrodes:** Printable Commercial Silver Ink | Electrical Resistivity [Ω cm$^{-1}$] | $\rho_c, \rho_{elec}$ | $3 \times 10^{-5}$ | - |
| | Thermal Conductivity [W m$^{-1}$ K$^{-1}$] | $k_c, k_{elec}$ | 10 | - |
| | Thickness of electrical contact layers [µm] | $h_c$ | 50 | Up to $10^4$ |
| | Thickness EC Electrodes [µm] | $h_{elec}$ | 10 | - |
| **Electrocaloric Material:** PVDF-TrFE-CFE (7% CFE)[31] | Density [kg m$^{-3}$] | $\zeta_{EC}$ | 1.8 | - |
| | Specific Heat Capacity [J kg$^{-1}$ K$^{-1}$] | $c_v$ | 1500 | - |
| | Thermal Conductivity [W m$^{-1}$ K$^{-1}$] | $k_{EC}$ | 0.2 | - |
| | Relative Permittivity | $\varepsilon_{rEC}$ | 50 | - |
| | Adiabatic Electric Field [MV m$^{-1}$] | $E_{ad}$ | 60 | T dependent |
| | Thickness [µm] | $h_{EC}$ | 10 | - |
| | MLC layer number | $n$ | 10 | - |
| | MLC Resistance [Ω] | $R_{MLC}$ | 1 | 0.1 to $10^6$ |
| | MLC Charging Time [µs] | $t_{ad}$ | - | Up to $10^6$ |
| | EC Energy Loss | $\omega_{EC}$ | 0 | Up to 0.1 |
| | Thermal Conductivity [W m$^{-1}$ K$^{-1}$] | $k_{filler}, k_i$ | 0.02 | ~0 to 2.5 |

| Filler and Insulating layer: Polyurethane Foam | Thickness Insulating layer [μm] | $h_i$ | 10 | - |
|---|---|---|---|---|
| | Thickness Filler [μm] | $h_{filler}$ | Same as $h$ or $h_c$ | |
| Temperature Parameters | Average System Temperature [K (°C)] | $T$ | 298.15 (25) | - |
| | Device Temperature Change [K] | $\Delta T_{device}$ (2Δ) | 2 | up to 10 |
| | Adiabatic Temperature Change [K] | $\Delta T_{ad}$ (2δ) | 3 | up to 16 |
| Device Geometry | TE leg size [μm] | $w$ | 800 | - |
| | TE inter-leg spacing [μm] | $l$ | 200 | - |
| | Device Area [cm²] | $A_{device}$ | 25 (5×5) | - |

## OPERATION TEMPERATURE

The effect of operation temperature was analyzed for a 2D array of $\Delta T_{ad}$ and $\Delta T_{device}$ (ranging from 0 up to 16 K). As $\Delta T_{ad}$ depends on the applied electric field, $E_{ad}$, we have performed a linearization of these two variables, as a first approximation, based on the temperature changes for PVDF-TrFE-CFE: $E_{ad} = 2 \times 10^7 \cdot \Delta T_{ad}$. As this first group of calculations has been performed for $\omega_{EC} = 0$, the variations on $E_{ad}$ will not affect the device power consumption.

**Fig. 4** shows several surface and line plots of the TE module current (first module - $I_1$), $Q_{in}$, $PpA$, and $COP$ as a function of $\Delta T_{ad}$ and $\Delta T_{device}$. The dashed lines shown in a), b), c), and d), correspond to the case $\Delta T_{ad} = \Delta T_{device}$. From the surface plot in a), we can see $I_1$ increases with both variables, which is beneficial in a practical device and is expected to decrease power consumption.

**In Fig. 4 b)**, $Q_{in}$ displays positive values for $\Delta T_{ad} > \Delta T_{device}$ and reaches absolute values of the order 2 kW m$^{-2}$ when $\Delta T_{ad} \gg \Delta T_{device}$. For the case where $\Delta T_{ad} < \Delta T_{device}$, $Q_{in}$ presents negative values, and the device releases heat into the cold side; whereas for $\Delta T_{ad} = \Delta T_{device}$ (dashed line), the device is not able to absorb heat.

**Fig. 4 c)** shows the $PpA$ which follows the same trend as the applied current ($\propto I_1^2$).

Finally, the $COP$ is plotted in Fig. 4 d), and is seen to increase for low temperature values. For $\Delta T_{ad} < 3$ K and $\Delta T_{ad} \gg \Delta T_{device}$, the COP greatly increases (above 50, seen as white areas), beyond the scale of the surface plot. For $\Delta T_{ad} < \Delta T_{device}$, the $COP$ presents a mirrored behavior as a consequence of the negative $Q_{in}$, and heat is transported from the hot side back to the cold side.

Lastly, for $\Delta T_{ad} = \Delta T_{device}$, the $COP$ is zero and the device does not extract heat ($Q_{in} = 0$). Optimal performances are obtained for very low operation temperatures, i.e. $\Delta T_{ad}$ below 3 K.

Fig. 4 e), f), and g) show additional line plots of $I_1$, $PpA$, and $COP$, respectively, as a function of $\Delta T_{device}$ for several $\Delta T_{ad}$ ($\Delta T_{ad} = \Delta T_{device} + \Lambda$, with $\Lambda$ from 1 to 6 K). These variables show the same tendencies observed in the surface plots, with the increases in $\Delta T_{ad}$ leading to small overall increases in $I_1$ and $PpA$, with the latter increasing considerably as we increase $\Delta T_{device}$ due to the quadratic dependence on $I_1$.

The $COP$ decreases considerably as we increase $\Delta T_{ad}$ (first arrow, downwards). Nevertheless, for larger $\Delta T_{device}$ (> ~1.5 K) the $COP$ increases slightly with $\Delta T_{ad}$ (second arrow, upwards), slowly increasing device performance for higher $\Delta T_{device}$. The obtained data clearly shows the device performs in optimal way at lower temperatures and low adiabatic temperature changes with potentially large $COP$ values in this range. Interestingly, by increasing $\Delta T_{ad}$ for larger $\Delta T_{device}$, a small increase in device performance can be obtained.

## GEOMETRY

Varying geometrical parameters may result in slight improvements in device performance, compensating less adequate material properties. We have studied the influence of the area ratio between the TE and the filler materials ($A_{ratio} = A_{TE}/A_{fille}$, see Fig. 3) and the number of TE pairs (N). Fig. 5 a), b), c), and d) show several surface plots for $I_1$, $Q_{in}$, $PpA$, and $COP$, respectively, as a function of $1/A_{ratio}$ (equal to $A_{filler}/A_{TE}$) and N. Varying $A_{ratio}$ affects the relative proportion of Thermoelectric material x to filler material x, but also the lateral size of the electrical contact pads. On the other hand, increasing the number of the TE pairs x reduces the lateral leg size and the inter-leg spacing of the TE module x. The effects of these two variables can be clearly seen in these plots. In Fig. 5 a), $I_1$ presents the highest values for low N with a low

dependence on $1/A_{ratio}$. Lower $1/A_{ratio}$ values are also translated into larger $A_{TE}$, and because the TE material presents a higher thermal conductivity, the device 8 requires a larger $I_1$ to ensure no heat is expelled back to the cold side. These different contributions are responsible for the observed $I_1$ maximum primarily located at low $N$ and low $1/A_{ratio}$. $Q_{in}$ has a linear dependence on $N$, increasing with $N$ [Fig. 5 b)]. As $Q_{in}$ is also related to the thermal conductance ($S_k$) of the TE module x, we observe an increase in its value as $1/A_{ratio}$ decreases, *i.e.*, as the proportion of TE material increases, particularly for larger $N$. In c), the evolution of $PpA$ follows a distinct trend from that observed for $I_1$. In previous cases, we have observed a clear trend between $I_1$ and $PpA$, with increases in $I_1$ signifying increases in device power consumption. However, for this set of parameters ($N$ and $1/A_{ratio}$) $I_1$ and $PpA$ are dominated by different variables, with $I_1$ presenting a strong dependence on $N$ (through the Peltier effect) and on $S_k$, and $PpA$ presenting a strong reliance on $R_{leg}$ of the device. $PpA$ presents the lowest values for low TV, with a low variation on $1/A_{ratio}$, as the lateral dimensions of the TE legs and the surface cross-sections are relatively large, decreasing device resistance.

The *COP* is shown in Fig. 5 d), presenting the highest values for low $1/A_{ratio}$ (higher $A_{TE}$) across the entire range of considered $N$ values.

These results show that a clever choice of device design parameters may help to fine tune device performance (and the power consumption or the absorbed heat) for the set of used materials, offering another route for device improvement.

### Variations in Material Layer Thickness

In addition to the material proportion and size variations (by varying $A_{ratio}$ and $N$), the thickness of the thermoelectric material 60, 62 and electrical contact layers x, x was also investigated. The dependence of the COP with $h$ and $h_c$ was analysed, for several $\Delta T_{device}$ ranging from 2 to 6 K (with $\Delta T_{ad} = \Delta T_{device} + 1$), as seen in Figs. 8 a) and b).

It is important to notice that the observed variations in $I_1$, $Q_{in}$, $PpA$, and COP with $N$, $1/A_{ratio}$, $h$, and $h_c$ are relatively small compared to the results seen for variation in area ratio and $N$. Lastly, Fig. 8 c) shows a plot of the TE leg width ($w$) with $N$, for several values of $A_{ratio}$. For low $N$, the TE leg width is relatively large reaching values above 2 mm, while for larger $N$ we obtain values well below 1 mm. These values and the observed tendency with $N$ coincides with the observed behavior and dependencies for the $PpA$. This plot also demonstrates that even for larger $N$ values, the lateral size of the TE legs 42 is still well within the hundreds of micrometers, which are sizes compatible with many different fabrication techniques.

### OPERATION FREQUENCY

The device operation frequency, $f_{cycle}$, is obtained from the thermal exchange time, $t_{ex}$, and the MLC charging time, $t_{ad}$ (or alternatively, adiabatic polarization/depolarization time). The $t_{ex}$ is dictated by the $S_k$ of the TE modules 10, and its value should ensure maximum heat absorption during the closed state of the TS 10, *i.e.*, approaching thermalization between the cold side and the EC module 12.

It is possible to vary $f_{cycle}$ by changing $t_{ad}$ through the external resistance of the MLC, $R_{MLC}$. Fig. 6 shows several plots of $f_{cycle}$, *COP*, and $Q_{in}$ and the power consumption $PpA$ as a function of $t_{ad}$. We can see that $f_{cycle}$, *COP*, and $Q_{in}$ decrease with increasing $t_{ad}$, asymptotically reaching zero for large $t_{ad}$. The reduction is more significant for mid-range $t_{ad}$ values, between $10^2$ to $10^3$ μs. Despite this, by adjusting $t_{ad}$ to values between $10^2$ to $10^3$ μs ($R_{MLC}$ of the order of 10 to 100 Q, see below "Multi-layered Capacitor Resistance from $t_{ad}$" and Fig. 9) we are able to reduce $f_{cycle}$ by half, from *ca*. 1.7 kHz down to 800 Hz. This is an important aspect as the proper operation of the solid-state electrocaloric device x requires a set of supporting electronics that power the TSs 10. A reduced $f_{cycle}$ can constitute a reasonable compromise when designing the supporting electronics for the system 2. Lastly, in Fig. 6 c) the $PpA$ is observed to increase with $t_{ad}$, albeit less strongly. This is because the increase in $t_{ad}$ has two effects on $PpA$: an increase due to prolonged operation time of the TSs; and a decrease from diluting the total energy by progressively longer operation cycles. In this particular case, the increase in the power consumption of the TSs is more significant than the diluting effect of prolonged cycles. The considered reduction of $f_{cycle}$ from 1.7 kHz to 800 Hz entails an increase in $PpA$ from around 42 to 65 W m$^{-2}$, approximately a 55% increase.

### ENERGY LOSS AT THE ELECTROCALORIC MODULE

To understand the effects of the EC module 12 power consumption on the overall performance, we have calculated the power consumption $PpA$ and the *COP* as functions of $\Delta T_{device}$ (with $\Delta T_{ad} = \Delta T_{device} + 1$) and $t_{ad}$ [Figs. 7 a) and b), and c) and d), respectively], for several $\omega_{EC}$ values up to 0.1 (corresponding to 10%). From Fig. 7 a) we can see that power consumption $PpA$ increases greatly with the energy loss $\omega_{EC}$, reaching values two or three orders of magnitude higher, even for $\omega_{EC}$ as low as 0.01 (1%). This is also observed in Fig. 7 b), where the *COP* decreases substantially with $\omega_{EC}$ by two to three orders of magnitude. As the energy required to polarize the EC material is independent of the charging time, we can attempt to reduce the power consumption $PpA$ by increasing the device operation cycle through increases in $t_{ad}$.

The method comprises a step of operating solid-state electrocaloric device 8 at electrocaloric (EC) energy loss

$\omega_{EC}$ up to 0.1 (10%).

The power consumption PpA increases greatly with energy loss $\omega_{EC}$ up to 0.1 (10%), reaching values two or three orders of magnitude higher, even for $\omega_{EC}$ as low as 0.01 (1%).

The method comprises a step of operating the solid-state electrocaloric device 8 at multilayered capacitor (MLC) charging time, tad, ranging between 1ms to 100ms when considering material losses of 10%.

Thus, for $t_{ad}$ of 1 ms, a decrease in power consumption of around 80% can be obtained.

For $t_{ad}$ of 100 ms, a decrease in power consumption of 99.3% is can be obtained. These values are compared to the power consumption estimation for a $t_{ad}$ of 1 μs (0.001 ms).

The method comprises a step of operating the solid-state electrocaloric device 8 at multilayered capacitor (MLC) charging time, $t_{ad}$, of 1ms when considering material losses of 10%.

When considering material losses of 10%, a decrease in power consumption of around 80% is observed for a tad of 1 ms, and down to 99.3% for a tad of 100 ms, when compared to the power consumption estimation for a tad of 1 μs.

As a consequence, the value of $t_{ad}$ can be controlled by variations on the absolute value of the external resistances used by the supporting electric circuits required for the powering of the different modules of the device.

## Multi-layered Capacitor Resistance from $t_{ad}$

The operation frequency of the device can be changed through $t_{ad}$ by adjusting the external resistance of the MLC, $R_{MLC}$. Fig. 9 displays the values of $R_{MLC}$ as a function of the device $t_{ad}$, showing the order of magnitude of resistances that are required to obtain the different $t_{ad}$ values. As $t_{ad}$ is obtained directly from the capacitor charging time constant, we have that $t_{ad} \propto R_{MLC}$. We discussed above that significant changes to $Q_{in}$, $PpA$, COP, and $f_{cycle}$ are observed for mid-range $t_{ad}$ values, between $10^2$ to $10^3$ μs. These values would correspond to MLC resistance values of the order of 10 to 100 Ω, as shown in Fig. 9.

## CONCLUSION

- **Operation Temperature:** an optimal performance for a device with one electrocaloric module and two thermoelectric modules is obtained for $\Delta$Tad < 3 K and $\Delta$Tdevice < 1.5 K with difference between $\Delta T_{ad}$ and $\Delta T_{device}$ ranging between 1 and 2 K. COP improvements of 2 to 5 can be obtained for $\Delta T_{device}$ above 1.2 K by increasing the operation $\Delta T_{ad.}$ of 1 to 5 K above the value of $\Delta T_{device}$. For the considered range of temperatures for operation, $I_1$ and PpA were of the order of 50 mA and 150 W m$^{-2}$ respectively, constituting a point in favor of organic materials;

- **Geometry:** the variation in material proportion (through $A_{ratio}$) and size (through N) in the TE module produced a decoupling of the applied currents and the power consumption, demonstrating that performance can be improved through geometry improvements. Optimal performances were obtained for larger $A_{ratio}$ (i.e., larger $A_{TE}$), as the total device resistance was minimized. The calculated TE leg sizes, from $A_{ratio}$ and N, also show the fabrication of these structures are compatible with several fabrication techniques with feature size the thermoelectric leg w, and the inter-leg spacing 1 of the order of $10^2$ to $10^3$ μm (0.1 and 1 mm).

- **Operation Frequency:** Varying $t_{ad}$ offers a route to vary device $f_{cycle}$ (in this case, to decrease the frequency), which is an important parameter that must be taken into consideration when developing the supporting electronics that control the device;

- **EC Energy Loss:** We observed that power consumption PpA could be mitigated by increasing $t_{ad}$; when considering material losses of 10%, a decrease in power consumption of around 80% is observed for a $t_{ad}$ of 1 ms, and down to 99.3% for a $t_{ad}$ of 100 ms, when compared to the power consumption estimation for a tad of 1 μs (0.001 ms).

Optimal electrocaloric and thermoelectric properties are found mostly within the electrically polarizable material comprises a PVDF-based co- and/or ter-polymer or their blends, in particular [poly (vinylidene fluoride)-ter-trifluoroethylene-ter-chlorofluoroethylene (PVDF-TrFE-CFE), and for device variations temperature change $\Delta$Tdevice below 10 K.

The here-above embodiments are illustrative and not restrictive embodiments. Obviously, many modifications and variations of the present invention are possible in the light of the above teachings without deviating from its inventive concept. It has therefore to be understood that the invention may be practiced otherwise that as specifically described.

**Claims**

1. A solid-state electrocaloric device (8) comprising:

   - at least two solid-state thermoelectric heat switch modules (10),
   - at least one electrocaloric module (12) comprising at least one solid-state electrocaloric active layer (120) made of electrically polarizable material configured to receive or to release the heat to the thermoelectric heat switch modules (10), and

   said electrocaloric module (12) is between said solid-state thermoelectric heat switch modules (10) and in thermal contact with said solid-state thermoelectric heat switch modules (10).

2. Solid-state electrocaloric device (8) according to claim 1, comprising at least two thermoelectric modules (10) comprising a thermoelectric material (60, 62), said thermoelectric modules (10) are configured to operate as solid-state thermoelectric heat switch modules (10).

3. Solid-state electrocaloric device (8) according to claim 1 or 2, wherein the solid-state electrocaloric active layer (120) is between a pair of two electrical contact layers so as to form a parallel plate single-layered capacitor.

4. Solid-state electrocaloric device (8) according to claim 3, wherein the electrocaloric active layer (120) is at least partially in contact with the pair of two electrical contact layers (20).

5. Solid-state electrocaloric device (8) according to claim 4, wherein the electrocaloric module (12) comprises a plurality of subsequent solid-state electrocaloric active layers (20) forming a multi-layered capacitor (22).

6. Solid-state electrocaloric device (8) according to claim 5, wherein at least one electrical contact layer (46) forms a gap (g) such that two consecutive electrocaloric active layers (20) are in contact with each other across the gap (g).

7. Solid-state electrocaloric device (8) according to claim 6, wherein at least two consecutive electrical contact layers (46) form gaps (g) that are located at opposite free ends (47) of consecutive electrical contact layers (46).

8. Solid-state electrocaloric device (8) according to any one of the preceding claims, wherein the device (8) is configured to operate at an operation frequency ($f_{cycle}$) up to 2 kHz, preferably ranging between 500 Hz and 2 kHz.

9. Solid-state electrocaloric device (8) according to any one of the preceding claims, the electrically polarizable material comprises organic and/or polymeric electrically polarizable material.

10. Solid-state electrocaloric device (8) according to claim 9, wherein the electrically polarizable material comprises a PVDF-based co- and/or ter-polymer or their blends, in particular [poly (vinylidene fluoride)-ter-trifluoroethylene-ter-chlorofluoroethylene (PVDF-TrFE-CFE).

11. Solid-state electrocaloric device (8) according to any one of the preceding claims, wherein a plurality of solid-state electrocaloric active layers (20) that are stacked adjacent to each other so as to form a cascaded layers between the solid-state thermoelectric heat switch modules (10).

12. A heat transfer system (2) for transferring heat from a heat source (4) to heat sink (6), the heat transfer system (2) comprising:

   - at least one solid-state electrocaloric device (8) according to any one of the preceding claims; and
   - the heat source (4) and the heat sink (6), and

   the solid-state electrocaloric device (8) is between the heat source (4) and the heat sink (6).

13. Method for controlling operation temperature of the solid-state electrocaloric device (8) according to any one of the claims 1 to 12, said method comprising the step of operating said solid-state electrocaloric device (8) at adiabatic temperature change $\Delta Tad$ and device temperature change $\Delta Tdevice$ such that $\Delta Tad$ is inferior to 10 K.

14. Method according to claim 14, wherein the adiabatic temperature change $\Delta Tad$ is superior to device temperature

change $\Delta$Tdevice so as to make the adiabatic temperature change $\Delta$Tad inferior to 3 K.

15. Method according to claim 13 or 14, wherein the adiabatic temperature change $\Delta$Tad < 3 K and the device temperature change $\Delta$Tdevice < 1.5 K with difference between adiabatic temperature change $\Delta$Tad and device temperature change $\Delta$Tdevice which is ranging between 1 and 2 K.

FIGURE 1

FIGURE 2

FIGURE 3

FIGURE 4

a) Current with $N$ and $1/A_{ratio}$
($\Delta T_{ad}$ = 3.0 K, $\Delta T_{device}$ = 2.0 K)

b) $Q_{in}$ with $N$ and $1/A_{ratio}$
($\Delta T_{ad}$ = 3.0 K, $\Delta T_{device}$ = 2.0 K)

c) $PpA$ with $N$ and $1/A_{ratio}$
($\Delta T_{ad}$ = 3.0 K, $\Delta T_{device}$ = 2.0 K)

d) $COP$ with $N$ and $1/A_{ratio}$
($\Delta T_{ad}$ = 3.0 K, $\Delta T_{device}$ = 2.0 K)

FIGURE 5

EP 4 488 601 A1

FIGURE 6

FIGURE 7

FIGURE 8

FIGURE 9

## EUROPEAN SEARCH REPORT

**Application Number**

EP 23 18 3237

Europäisches Patentamt
European Patent Office
Office européen des brevets

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/056809 A1 (UNIV CAMBRIDGE TECH [GB]; MATHUR NEIL [GB]; MISHCHENKO ALEXANDR [GB]) 1 June 2006 (2006-06-01) | 1,2,8, 11-15 | INV. F25B21/00 |
| Y | * pages 6-25; figures 3--10,15 * ----- | 3-7,9,10 | |
| Y | US 9 915 446 B2 (INST JOZEF STEFAN [SI]; UNIV OF LJUBLJANA [SI]; GORENJE D D [SI]) 13 March 2018 (2018-03-13) * column 4, lines 29-41; figure 12 * ----- | 3-7,9 | |
| Y | CN 114 437 477 A (UNIV CENTRAL SOUTH) 6 May 2022 (2022-05-06) * Chapter "BACKGROUND TECHNIQUE" in the English translation of the document. * ----- | 9,10 | |

**TECHNICAL FIELDS SEARCHED (IPC)**

F25B
C08K

The present search report has been drawn up for all claims

| Place of search | Date of completion of the search | Examiner |
|---|---|---|
| Munich | 8 December 2023 | Lepers, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 23 18 3237

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | | Publication date | Patent family member(s) | | Publication date |
|---|---|---|---|---|---|
| WO 2006056809 | A1 | 01-06-2006 | NONE | | |
| US 9915446 | B2 | 13-03-2018 | CN | 105593616 A | 18-05-2016 |
| | | | EP | 3027980 A1 | 08-06-2016 |
| | | | PL | 3027980 T3 | 30-04-2018 |
| | | | US | 2016187034 A1 | 30-06-2016 |
| | | | WO | 2015014853 A1 | 05-02-2015 |
| CN 114437477 | A | 06-05-2022 | NONE | | |

EPO FORM P0459

For more details about this annex : see Official Journal of the European Patent Office, No. 12/82